(19) **Europäisches Patentamt**

**European Patent Office**

**Office européen des brevets**

(11) **EP 0 823 653 A1**

(12) # DEMANDE DE BREVET EUROPEEN

(43) Date de publication:
**11.02.1998 Bulletin 1998/07**

(51) Int Cl.6: **G02F 1/13**, G02F 1/1333,
G02F 1/15, G02F 1/153,
E06B 3/66, B60R 1/08,
G03B 21/56

(21) Numéro de dépôt: **97401568.7**

(22) Date de dépôt: **03.07.1997**

(84) Etats contractants désignés:
**AT BE CH DE DK ES FI FR GB GR IE IT LI LU MC
NL PT SE**

(30) Priorité: **10.07.1996 FR 9608591**

(71) Demandeur: **SAINT-GOBAIN VITRAGE
92400 Courbevoie (FR)**

(72) Inventeurs:
• **Fix, Renaud
75015 Paris (FR)**
• **Lin, Xueyun
92260 Fontenay Aux Roses (FR)**

(74) Mandataire: **Renous Chan, Véronique et al
Saint-Gobain Recherche,
39, Quai Lucien Lefranc
F-93300 Aubervilliers (FR)**

(54) **Eléments à propriétés optiques/énergétiques variables**

(57) L'invention a pour objet un élément à propriétés optiques variables qui associe au moins un système à transmission/absorption lumineuse variable, notamment du type électrochrome ou viologène, à au moins un système à diffusion lumineuse variable, notamment du type valve optique ou à cristaux liquides. Les systèmes sont électrocommandés afin de moduler de manière décorrélée le niveau de transmission lumineuse et le niveau de diffusion lumineuse de l'élément.

Fig. 1

## Description

La présente invention concerne les éléments, notamment les vitrages, à propriétés optiques/énergétiques variables. Elle se rapporte plus précisément à des vitrages dont on peut modifier certaines caractéristiques sous l'effet d'une alimentation électrique, par exemple la diffusion lumineuse ou la transmission dans certaines longueurs d'onde du rayonnement électromagnétique, notamment dans l'infrarouge ou dans le visible.

Il existe en effet une demande de plus en plus accrue pour des vitrages dits « intelligents », c'est-à-dire des vitrages dont on peut moduler les propriétés à volonté, notamment afin de tenir compte de différents paramètres évolutifs. Ainsi, il peut s'avérer très avantageux que l'on puisse contrôler l'apport solaire à travers des vitrages montés en extérieur dans des bâtiments ou des véhicules du type automobile ou train, afin d'éviter un échauffement excessif des pièces ou habitacles en cas de fort ensoleillement. De même, il peut être utile de pouvoir contrôler le degré de vision à travers des vitrages, notamment de le réduire voire de l'empêcher totalement pendant un certain temps, par exemple dans le cas de vitrages utilisés comme cloisons internes entre deux pièces, dans un bâtiment, ou entre deux compartiments, dans un moyen de locomotion du type train ou avion. Beaucoup d'autres applications existent aussi pour de tels vitrages : on peut mentionner par exemple les rétroviseurs de véhicules, qui, en s'obscurcissant en cas de besoin, peuvent éviter l'éblouissement du conducteur, ou les panneaux de signalisation routiers ou urbains, ne faisant apparaître messages ou dessins que par intermittence afin de mieux attirer l'attention. On peut également citer les vitrages transparents pouvant présenter un état suffisamment diffusant pour être utilisés en tant qu'écrans de projection.

L'intérêt que peuvent susciter de tels vitrages justifie que beaucoup de systèmes aient déjà été étudiés. Ainsi, des systèmes connus permettant de moduler la transmission ou l'absorption lumineuse de vitrages sont notamment les systèmes dit viologènes, comme ceux décrits dans le brevet US-5 239 406 ou dans le brevet EP-A-0 612 826.

Dans le même but, il existe également des systèmes dits électrochromes dont on rappelle brièvement le principe de fonctionnement : ceux-ci, de manière connue, comportent une couche d'un matériau électrochrome capable d'insérer réversiblement et simultanément des cations et des électrons et dont les états d'oxydation correspondant aux états insérés et désinsérés sont de coloration distincte, un des états présentant une transmission lumineuse plus élevée que l'autre. La réaction d'insertion ou de désinsertion est commandée par une alimentation électrique adéquate à l'aide d'un générateur de courant ou d'un générateur de tension. Le matériau électrochrome, usuellement à base d'oxyde de tungstène, doit ainsi être mis au contact d'une source d'électrons telle qu'une couche électroconductrice transparente et d'une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome, de sorte que, macroscopiquement, l'électrolyte apparaît comme un simple médium des cations.

La contre-électrode doit être constituée ou d'une couche neutre en coloration, ou du moins transparente ou peu colorée quand la couche électrochrome est à l'état décoloré. L'oxyde de tungstène étant un matériau électrochrome cathodique, c'est-à-dire que son état coloré correspond à l'état le plus réduit, un matériau électrochrome anodique tel que l'oxyde de nickel ou l'oxyde d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline...) ou le bleu de prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :

- soit l'électrolyte se présente sous la forme d'un polymère ou d'un gel, par exemple un polymère à conduction protonique tel que ceux décrits dans les brevets européens EP-0 253 713 et EP-0 670 346, ou un polymère à conduction d'ions lithium tels que ceux décrits dans les brevets EP-0 382 623, EP-0 518 754 ou EP-0 532 408,
- soit l'électrolyte est une couche minérale, conducteur ionique mais isolant électroniquement, on parle alors de systèmes électrochromes « tout solide ». Pour la description d'un système électrochrome « tout solide », on pourra se reporter à la demande de brevet française déposée le 27 mars 1996 sous le numéro de dépôt FR-96/03799.

Les systèmes viologènes ou électrochromes, déposés ou associés à des substrats transparents constituent des vitrages dont l'absorption et la transmission lumineuse (ainsi que la transmission énergétique) peuvent varier dans des plages données, plages déterminées notamment par le choix des matériaux électrochromes utilisés et/ou par le choix de leur épaisseur. Cependant, ces vitrages présentent certaines limites qui leur sont intrinsèques: ainsi, même si certaines configurations leur permettent d'atteindre des valeurs de transmission lumineuse très faibles à l'état coloré, par exemple de l'ordre de 1% jusqu'à 0,1%, ils ne peuvent assurer une occultation complète, autrement dit, leur niveau de transmission lumineuse est malgré tout encore trop élevé pour empêcher l'identification d'un objet ou d'une personne à travers le vitrage par un observateur situé de l'autre côté dudit vitrage, surtout s'il y a une source lumineuse plus importante du côté de l'objet, par exemple dans le cas d'une pièce éclairée la nuit.

Pour obtenir cet effet, le vitrage électrochrome seul ne peut donc suffire, et il va falloir lui adjoindre un élément extérieur, qui, selon les besoins, va soit rendre la vision floue à travers le vitrage, comme un voilage, soit carrément empêcher totalement la vision en opacifiant ce dernier, c'est le cas d'un élément du type volet. Ces éléments, cependant, nécessitent un entretien, vieillissent mal, et ont des propriétés qui ne sont pas modulables.

Un autre type de vitrage « intelligent » est constitué par ce qu'on désigne sous le terme de valve optique : il s'agit d'un film comprenant une matrice de polymère généralement réticulé dans laquelle sont dispersées des micro-gouttelettes contenant des particules qui présentent la propriété de se placer selon une direction privilégiée sous l'action d'un champ électrique ou magnétique.

En fonction notamment du potentiel appliqué aux bornes des couches conductrices placées de part et d'autre du film, et de la concentration et de la nature des particules orientables, le film présente des propriétés optiques variables.

Ainsi, il est connu du brevet WO-93/09460 une valve optique à base d'un film comprenant une matrice en polyorganosilane réticulable et des particules orientables minérales ou organiques, plus particulièrement des particules absorbant la lumière telles que des particules de polyiodure. Quand le film est mis sous tension, les particules interceptent beaucoup moins la lumière que lorsqu'il est hors tension.

Un vitrage dont le principe de fonctionnement est similaire est également connu sous le terme de vitrage à cristaux liquides. Il est basé sur l'utilisation d'un film placé entre deux couches conductrices et à base d'une matière polymérique dans laquelle sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision.

Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société SAINT-GOBAIN VITRAGE sous la dénomination commerciale « Priva-lite ».

On peut en fait utiliser tous les dispositifs à cristaux liquides connus sous les termes de « NCAP » (Nematic Curvilinearly Aligned Phases) ou « PDLC » (Polymer Dispersed Liquid Cristal).

On peut également utiliser, par exemple, les polymères à cristaux liquides cholestériques, comme ceux décrits dans le brevet WO-92/19695.

Ces vitrages ont eux aussi leurs limites : ainsi, s'ils permettent effectivement d'obtenir une diffusion lumineuse variable, ils ne permettent pas d'assombrir significativement la pièce ou l'habitacle dans lesquels ils peuvent être montés.

Pour parvenir à jouer également sur la transmission lumineuse, il existe une solution qui consiste à ajouter dans le film des colorants, du type colorants dichroïques. Deux inconvénients persistent cependant : d'une part, avec ces colorants, le film présente une certaine instabilité tout particulièrement vis-à-vis des rayonnements ultraviolets et ces colorants sont solubles non seulement dans les gouttelettes de cristaux liquides, mais aussi en partie dans le polymère ; ce qui limite les possibilités de moduler la transmission lumineuse du système. D'autre part, les variations de diffusion et de transmission lumineuse sont étroitement dépendantes l'une de l'autre : on ne peut obtenir que des « couples » transmission lumineuse élevée/état non diffusant ou transmission lumineuse faible/état diffusant.

L'invention a alors pour but de pallier les lacunes des différents vitrages « intelligents » existant actuellement et tout particulièrement de mettre au point un vitrage dont on puisse ajuster avec plus de souplesse plusieurs caractéristiques, tout particulièrement optiques.

L'invention a pour objet un élément à propriétés optiques variables qui associe au moins un système à transmission/absorption lumineuse variable, notamment du type système électrochrome ou viologène, à au moins un système à diffusion lumineuse variable, notamment du type valve optique ou à cristaux liquides. Ces deux systèmes sont électrocommandés afin de moduler, de manière décorrélée, le niveau de transmission lumineuse et le niveau de diffusion lumineuse dudit élément. De préférence, le système à diffusion lumineuse variable fonctionne de façon à ce qu'il soit plus diffusant quand il n'est pas alimenté en électricité que lorsqu'il est alimenté électriquement, et notamment dans son état de diffusion maximale quand il n'est pas alimenté.

L'élément selon l'invention, se présentant notamment sous la forme d'un vitrage, ouvre de nouveaux champs d'application pour les vitrages dits « intelligents ». En effet, il autorise les sélections de deux caractéristiques optiques différentes, indépendamment l'une de l'autre, sachant que les deux systèmes qu'il comporte ont chacun leur alimentation électrique, qui peuvent être « pilotées » séparément ou conjointement.

Tout système viologène ou électrochrome peut convenir, notamment du type de ceux décrits dans les brevets précités EP-0 338 876, EP-0 408 427, EP-0 575 203, EP-0 628 849. Il se présente de préférence sous la forme d'un empilement de couches fonctionnelles comprenant successivement une couche électroconductrice de préférence transparente, une couche électrochrome dite cathodique susceptible d'insérer réversiblement des cations tels que H$^+$, Li$^+$, Na$^+$, Ag$^+$, une couche d'électrolyte, éventuellement une contre-électrode sous la forme d'une seconde couche électrochrome dite anodique également susceptible d'insérer réversiblement des cations et enfin une seconde couche électroconductrice.

En ce qui concerne la nature des couches électroconductrices du dispositif, il y a deux variantes possibles : on peut avoir recours à des matériaux à base d'oxyde métallique dopé tels que de l'oxyde d'étain dopé au fluor SnO$_2$:F ou l'oxyde d'indium dopé à l'étain ITO. On peut aussi utiliser des couches en métal ou en alliage métallique, par exemple à partir d'or Au, d'argent Ag ou d'aluminium Al. Le dispositif possédant généralement deux couches électroconductrices, elles peuvent être soit toutes les deux métalliques, soit toutes les deux à base d'oxyde dopé, soit l'une à base de métal et l'autre à base d'oxyde dopé.

Pour constituer la couche de matériau électrochrome cathodique, on peut choisir un matériau ou un mélange de matériaux choisi(s) dans le groupe comprenant l'oxyde de tungstène WO$_3$, l'oxyde de molybdène MoO$_3$, l'oxyde de vanadium V$_2$O$_5$, l'oxyde de niobium Nb$_2$O$_5$, l'oxyde de titane TiO$_2$, un matériau « cermet » (association de matériau métallique et céramique, notamment sous la forme de particules métalliques dans une matrice céramique) tel que WO$_3$/Au ou WO$_3$/Ag, un mélange d'oxydes de tungstène et de rhénium WO$_3$/ReO$_3$. Ces matériaux conviennent notamment en cas d'insertion réversible d'ions lithium. Dans le cas où le dispositif fonctionne par insertion réversible de protons, on peut utiliser les mêmes matériaux, mais hydratés cette fois.

Pour constituer la couche de matériau électrochrome anodique, on peut choisir un matériau qui répond à la formule M$_x$A$_y$U$_z$, avec M un métal de transition, A l'ion utilisé pour l'insertion réversible, par exemple un alcalin ou un proton, et U un chalcogène tel que l'oxygène ou le soufre.

Il peut s'agir, notamment dans le cas d'une insertion d'ions protons H$^+$, d'un composé ou d'un mélange de composés appartenant au groupe comprenant IrO$_x$H$_y$, IrO$_x$H$_y$N$_z$, NiO$_x$, NiO$_x$H$_y$, NiO$_x$H$_y$N$_z$, RhO$_x$, CoO$_x$, MnO$_x$. Dans le cas d'une insertion réversible d'ions lithium Li$^+$, on choisit plutôt un composé ou un mélange de composés appartenant au groupe comprenant LiNiO$_x$, LiMn$_2$O$_4$, IrO$_x$, Li$_x$IrO$_y$, NiO$_x$, CeO$_x$, TiO$_x$, CeO$_x$-TiO$_x$, RhO$_x$, CoO$_x$, CrO$_x$, MnO$_x$.

En ce qui concerne le choix du matériau électrolyte, il y en a en fait de deux types comme cela a été évoqué précédemment.

Il peut s'agir d'une couche de liquide aqueux, tel que de l'eau additionnée d'acide sulfurique ou phosphorique dans le cas d'une insertion réversible de protons, d'une couche de liquide anhydre tel que du carbonate de propylène contenant un sel de lithium dans le cas d'une insertion réversible d'ions lithium. Il peut aussi s'agir d'une couche de gel ou de polymère, notamment des polymères conducteurs protoniques du type solution solide de polyoxyéthylène et d'acide phosphorique POE-H$_3$PO$_4$ (dans ce cas, le polymère constitue également un isolant électronique) ou encore à base d'un polymère obtenu par copolymérisation de trois précurseurs comprenant deux types de trialkoxysilanes greffés et un plastifiant présentant au moins un groupement urée. En tant que polymère conducteur d'ions lithium, on peut choisir un ionomère obtenu par neutralisation partielle d'acide polyacrylique, ou un polymère à base de polyéthylène imine branchée et d'un sel de lithium. Pour plus de détails sur la nature et la synthèse de tels produits polymériques, on se reportera avantageusement aux brevets cités en préambule de la présente demande.

Mais il peut aussi s'agir d'un électrolyte sous la forme d'un matériau solide, notamment à base d'oxyde métallique. Selon une variante préférée de l'invention, le système est choisi tel qu'il ne contient que des couches en matériau solide. Dans le contexte de l'invention, on entend par « matériau solide » tout matériau ayant la tenue mécanique d'un solide, en particulier tout matériau essentiellement minéral ou organique ou tout matériau hybride, c'est-à-dire partiellement minéral et partiellement organique, comme les matériaux que l'on peut obtenir par dépôt sol-gel à partir de précurseurs organo-minéraux. On a alors une configuration de système dit « tout solide » qui présente un avantage clair en termes de facilité de fabrication. En effet, quand le système contient un électrolyte sous forme de polymère qui n'a pas la tenue mécanique d'un solide, par exemple, cela contraint à fabriquer en fait, en parallèle, deux « demi-cellules » constituées chacune d'un substrat porteur revêtu d'une première couche électroconductrice puis d'une seconde couche électrochimiquement active, ces deux demi-cellules étant ensuite assemblées en insérant entre elles l'électrolyte. Avec une configuration « tout solide », la fabrication est simplifiée, puisque l'on peut déposer l'ensemble des couches du système, l'une après l'autre, sur un unique substrat porteur. On allège ainsi l'ensemble système électrochrome/substrat porteur, puisque l'on peut alors se contenter d'un unique substrat porteur au lieu de deux habituellement.

Cet allégement est d'autant plus appréciable ici que l'élément selon l'invention comporte également un second système actif, celui à diffusion lumineuse variable, et qu'il est donc important d'en limiter l'encombrement et le poids.

En outre, que l'électrolyte soit « solide » ou non, il peut comprendre une couche en un matériau conducteur ionique susceptible d'insérer de manière réversible les ions mais dont le degré d'oxydation est maintenu essentiellement constant. Il peut s'agir notamment d'un matériau à propriétés électrochromes, comme décrit dans le brevet FR-96/03799 précité.

Le système à transmission/absorption lumineuse variable de l'élément selon l'invention peut donc se trouver disposé soit entre deux substrats rigides, soit sur un seul substrat rigide plus particulièrement dans le cas d'un système « tout solide ». Les substrats porteurs rigides sont de préférence en verre, en polymère acrylique, en polycarbonate ou en certains polyuréthanes.

Le choix du système à diffusion lumineuse variable à incorporer dans l'élément selon l'invention se porte avantageusement sur les systèmes dits valves optiques ou à cristaux liquides qui ont été précédemment décrits. Dans le cas des systèmes à cristaux liquides, on choisit judicieusement la nature de la matrice polymérique et des cristaux de façon à ce que l'indice ordinaire des cristaux $n_o$ soit égal à l'indice du polymère $n_p$.

Qu'il s'agisse de valves optiques ou de systèmes à cristaux liquides, les systèmes se présentent tout deux sous la forme d'un film de polymère « actif », le polymère contenant des gouttelettes de suspension de particules dichroïques dans le cas des valves optiques et des gouttelettes contenant des cristaux liquides dans le cas des systèmes à cristaux liquides. Afin d'assurer son alimentation électrique, on le dispose usuellement entre deux couches électroconductrices, notamment transparentes et du type de celles utilisées pour les systèmes électrochromes précédemment décrits.

En outre, le film avec ses deux couches conductrices est usuellement muni sur au moins une de ses faces, et de préférence chacune d'entre elles, d'un substrat porteur. Celui-ci est généralement transparent. Il peut être choisi rigide ou semi-rigide, par exemple être en verre, polymère acrylique du type polyméthacrylate de méthyle PMMA ou en polycarbonate PC. Il peut aussi être flexible, notamment en polyéthylène téréphtalate PET ou à base de certains polycarbonates flexibles. On peut avoir ainsi une structure du type PET/ITO/polymère « actif »/ITO/PET, qui se présente sous la forme d'une feuille souple aisément manipulable. Cet ensemble (polymère « actif » + couches électroconductrices + au moins un substrat porteur) peut ensuite être feuilleté à au moins un substrat rigide transparent du type verre à l'aide d'au moins une couche de polymère organique d'assemblage du type polyvinylbutyral PVB, éthylènevinylacétate EVA ou certains polyuréthanes PU.

Le montage des deux systèmes, d'une part celui à transmission/absorption lumineuse variable, d'autre part celui à diffusion lumineuse variable en un élément commun peut s'opérer de différentes façons.

L'invention propose, de manière non limitative, quatre variantes, chacune ayant ses avantages en fonction de l'application visée :

☐ Selon une première variante, les deux systèmes sont maintenus solidairement l'un avec l'autre, mais sont espacés l'un de l'autre ou tout au moins montés de façon à ce qu'ils n'adhèrent pas totalement l'un à l'autre. On peut ainsi prévoir un des systèmes fixe, maintenu à demeure dans une position donnée, par exemple dans un bâtiment ou un véhicule, système auquel on vient apposer le second système, à l'aide de moyens de fixation éventuellement amovibles du type clips d'accrochage ou moyens adhésifs par pression, comme de la colle à base de dérivés d'acrylate. Des moyens sont prévus pour que les connexions électriques des deux systèmes soient assurées une fois les deux systèmes associés. Cette variante présente l'intérêt de pouvoir échanger rapidement un des systèmes contre un système neuf en cas de dégradation accidentelle, sans avoir à changer/démonter la totalité de l'élément.

☐ Selon une seconde variante, l'élément selon l'invention comporte un substrat rigide, du type substrat en verre. Sur l'une de ses faces, il est muni d'un système électrochrome « tout solide ». Sur la même face, superposé au système électrochrome, ou sur la face opposée, il est muni du système à cristaux liquides. La superposition peut aussi être faite dans l'autre sens, avec sur la même face d'abord le système à cristaux liquides puis le système électrochrome. L'intérêt de cette variante réside dans la compacité de l'élément ainsi réalisé : un seul substrat est requis.

☐ Selon une troisième variante, l'élément selon l'invention comporte deux substrats rigides, du type substrats en verre. Un premier mode de réalisation consiste à disposer entre les deux substrats les deux systèmes. Un second mode consiste à disposer un des deux systèmes entre les deux substrats, et le second sur la face extérieure de l'un des substrats. On a donc de préférence soit le système électrochrome entre les deux substrats et le système à cristaux liquides à l'extérieur, soit le contraire. Dans ce dernier cas, le système électrochrome le plus adapté est celui « tout solide ». Cette troisième variante est intéressante en ce sens qu'elle offre la possibilité d'utiliser un système électrochrome qui soit est « tout solide », soit comporte des couches non « solides ».

☐ Selon une quatrième variante, l'élément selon l'invention comporte trois substrats rigides, de type substrats en verre. Dans ce cas, l'un des systèmes est disposé entre le premier et le second substrat, et l'autre entre le second et le troisième substrat. L'avantage qu'offre cette variante réside dans la solidité obtenue : les couches fonctionnelles des deux systèmes sont totalement protégées mécaniquement.

Dans le cas où le système à diffusion lumineuse variable est un système à valve optique ou à cristaux liquides, que l'on veut faire adhérer à un substrat rigide du type verre ou au système à transmission variable du type électrochrome déjà déposé sur le substrat rigide, on peut prévoir un moyen adhésif entre les deux parties à assembler, notamment une colle ou un adhésif par pression, du type dérivés d'acrylate, ou encore une couche de polymère organique d'assemblage du type PVB, EVA ou PU. .

Par ailleurs, l'élément selon l'invention décrit précédemment peut être avantageusement monté en vitrage feuilleté et/ou en vitrage multiple à lame(s) de gaz intercalaire(s).

Venons-en maintenant aux applications de l'élément selon l'invention : l'élément est notamment utilisable en tant que vitrage pour le bâtiment, pour l'automobile, pour tous les véhicules industriels ou de transport collectif, en tant que vitrage ferroviaire ou vitrage avion.

On peut l'employer en tant que vitrage tourné vers l'extérieur d'une pièce ou d'un habitacle. Dans ce cas, on peut moduler le fonctionnement du système à transmission variable, notamment pour limiter l'apport énergétique dû au rayonnement solaire ou pour tamiser un peu la lumière pénétrant à l'intérieur. Dans le cas d'un système électrochrome, il sera d'autant plus coloré qu'on souhaite limiter la quantité de lumière et/ou de chaleur pénétrant dans l'habitacle ou la pièce : on ajuste le confort visuel et thermique. On module alors, en parallèle, le fonctionnement du système à diffusion lumineuse variable, de manière complémentaire, afin de pouvoir, par exemple, laisser le vitrage transparent ou au contraire le rendre complètement diffusant. Le niveau de diffusion lumineuse est généralement mesuré par le flou, qui est défini comme le rapport de la transmission diffuse sur la transmission totale à 560 nm.

L'élément selon l'invention peut ainsi à volonté présenter toute valeur de transmission lumineuse $T_L$ et toute valeur de flou dans des plages données.

En choisissant par exemple une $T_L$ élevée et un flou élevé, le vitrage peut acquérir une fonction « antiregard » qui permet de protéger l'intimité dans une pièce ou un habitacle. Cela peut permettre d'éviter d'avoir recours à des voilages.

En choisissant une $T_L$ basse combinée à un flou élevé, le vitrage peut acquérir la fonctionnalité supplémentaire d'un volet. En effet, la nuit, un tel vitrage s'avère très intéressant lorsqu'il équipe des pièces ou habitacles éclairés : des passants extérieurs ne peuvent plus voir au travers à l'intérieur desdits pièces ou habitacles, ce qui est pratique aussi bien dans le cadre de vitrages pour le bâtiment que de vitrages utilisés pour les compartiments de train-couchettes, notamment.

On peut également employer l'élément selon l'invention en tant que vitrage de cloison intérieure ou de porte vitrée. Dans ce cas, également, un obscurcissement combiné à un niveau de flou suffisant permet d'assurer une occultation/l'intimité d'une pièce à l'autre ou d'un compartiment à l'autre.

Il est important de souligner qu'aucun des deux systèmes, pris séparément, ne permettrait d'obtenir de tels résultats et une telle souplesse de fonctionnement. Seule leur utilisation conjointe permet en fait, de manière complémentaire, de dépasser les limites inhérentes à chacun d'entre deux. L'élément selon l'invention peut ainsi avoir, par exemple, une transmission lumineuse que l'on peut faire varier entre 1 et 60%, notamment entre 5 et 50% ou entre 0,01 et 20% par rapport à l'illuminant $D_{65}$ et un niveau de flou entre 1 et 100%, notamment entre 6 et 95 ou 99%, de manière indépendante.

L'élément selon l'invention peut également être avantageusement utilisé en tant que vitrage dit « brise-soleil » dans le bâtiment, notamment pour des vitrages destinés à être montés en présentant un angle d'inclinaison par rapport à la verticale, voire à être montés en position horizontale. Dans le contexte de l'invention, on comprend par « brise-soleil », la propriété d'éviter la formation de « tâches solaires » dans une pièce munie de vitrages fortement inclinés. Soit l'élément selon l'invention se substitue complètement au vitrage, soit il peut simplement y être apposé.

L'élément selon l'invention a aussi une application toute différente : il peut très avantageusement faire partie d'un écran pour rétroprojection, et tout particulièrement pour un rétroprojecteur fonctionnant en transmission. Les applications d'écrans de rétroprojection fonctionnant en transmission sont nombreuses. On peut notamment citer les vitrines, les panneaux publicitaires ou panneaux d'information. On se trouve donc de préférence dans la configuration où le projecteur se trouve d'un côté de l'élément et l'observateur du côté opposé. Dans l'élément servant d'écran, on dispose alors de préférence le système à diffusion variable du côté du projecteur et le système à transmission/absorption variable du côté de l'observateur. Ainsi, le faisceau lumineux émis par le projecteur traverse l'écran, et le système à transmission/absorption variable va permettre d'absorber une fois une partie du faisceau transmis, mais deux fois la lumière parasite réfléchie de manière diffuse sur l'écran. Cette lumière parasite provient de l'éclairage du côté de l'observateur.

Globalement, l'association système à transmission/absorption variable et système à diffusion variable permet d'améliorer significativement la qualité de l'image projetée, notamment en ajustant le niveau d'absorption de l'écran en fonction par exemple de l'éclairement ambiant. On peut ainsi préserver la qualité et la visibilité de l'image projetée, même si la projection s'effectue en plein jour. Cette amélioration de visibilité est en général mesurée qualitativement par la mesure du contraste C, qui, de manière connue, est définie par la relation suivante :

$$C = \frac{L_{max} + R_L}{L_{min} + R_L}$$

avec $L_{min}$ la luminance minimale, en référence à un point noir, et $L_{max}$ la luminance maximale, en référence à un point blanc, $R_L$ la lumière ambiante réfléchie par l'écran comprenant la réflexion diffuse par la composante diffusante de l'écran. De cette définition du contraste C, on comprend que plus la valeur de $R_L$ va pouvoir être diminuée, et meilleur sera le contraste, l'élément selon l'invention permettant justement de jouer sur la part diffuse de $R_L$, et d'ajuster ainsi le contraste au mieux, sans avoir à obscurcir le local où s'effectue la projection.

Dans le cas d'une rétroprojection fonctionnant cette fois en réflexion, c'est-à-dire quand à la fois l'observateur et le projecteur sont situés du même côté de l'écran, l'intérêt d'utiliser comme écran un élément selon l'invention existe, mais est moindre que dans le cas d'une rétroprojection fonctionnant en transmission : le système à transmission/absorption variable permet d'atténuer le niveau de transmission lumineuse directe traversant l'écran, quand celui-ci est placé devant une armature de fenêtre traditionnelle en obscurcissant le local où s'effectue la projection. Dans ce cas de figure, pour que les images projetées sur l'écran en réflexion soient discernables même en plein jour, il est préférable d'avoir recours à un système de transmission/absorption variable du type électrochrome permettant d'atteindre des valeurs de transmission lumineuse très faibles, par exemple inférieures à 0,1%, pour obtenir un véritable effet d'occultation vis-à-vis de la lumière extérieure.

L'invention concerne également le procédé de fonctionnement de l'élément selon l'invention, qui consiste à piloter conjointement l'alimentation électrique du système à transmission variable et l'alimentation électrique du système à diffusion variable, afin d'obtenir les niveaux de $T_L$ et de diffusion lumineuse voulus, soit par commande manuelle, soit de manière automatisée.

Pour l'alimentation électrique d'un système à $T_L$ variable du type électrochrome, on peut utiliser un générateur de tension ou un générateur d'intensité. Pour plus de détails, on peut se reporter par exemple aux brevets EP-408 427, EP-475 847, EP-568 457, EP-683 419 ou FR-2 728 696.

Pour l'alimentation électrique d'un système à diffusion variable du type à cristaux liquides, de manière connue, un générateur de tension adapté est suffisant, par exemple un signal sinusoïdal alternatif 110V/50 Hz.

L'un et/ou l'autre des deux systèmes peut donc être piloté électriquement par une régulation automatisée à l'aide de moyens électroniques et/ou informatiques. Soit la régulation s'opère en suivant une consigne pré-établie, soit elle est asservie à la mesure d'un paramètre donné par des capteurs appropriés. Les paramètres peuvent ainsi être la température, l'éclairement, la transmission lumineuse ou le flux solaire. Pour une application de l'élément selon l'invention en tant qu'écran de rétroprojecteur, c'est ainsi l'éclairement ambiant qui pourra être ce paramètre intéressant. S'il est utilisé en tant que vitrage extérieur de bâtiment ou de voiture, la température, le niveau de $T_L$ ou la mesure du flux solaire traversant l'élément sont plus intéressants.

D'autres détails et caractéristiques avantageuses ressortent de la description faite ci-après d'exemples non limitatifs, en référence aux dessins annexés qui représentent :

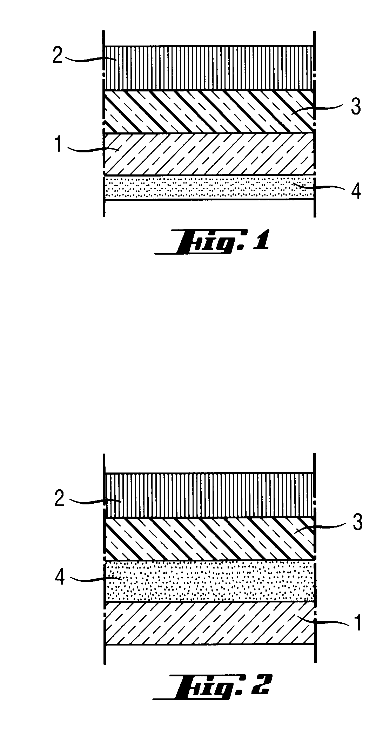

☐ **figures 1 et 2** : deux représentations d'éléments selon l'invention utilisant un seul substrat rigide,

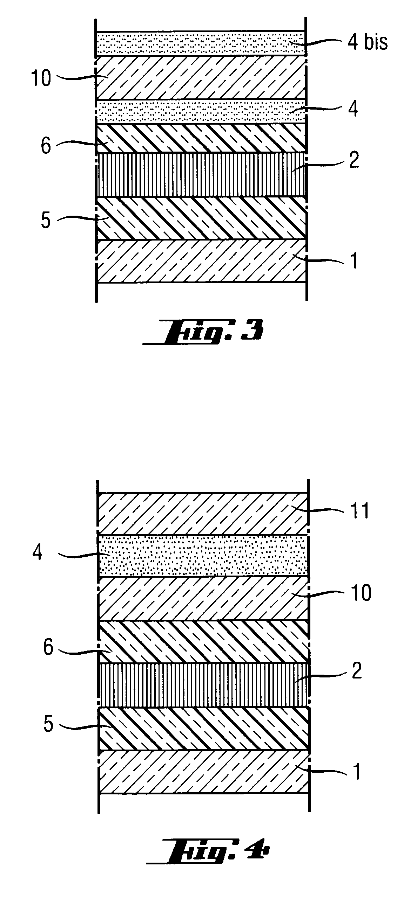

☐ **figure 3 :** une représentation d'un élément selon l'invention utilisant deux substrats rigides,

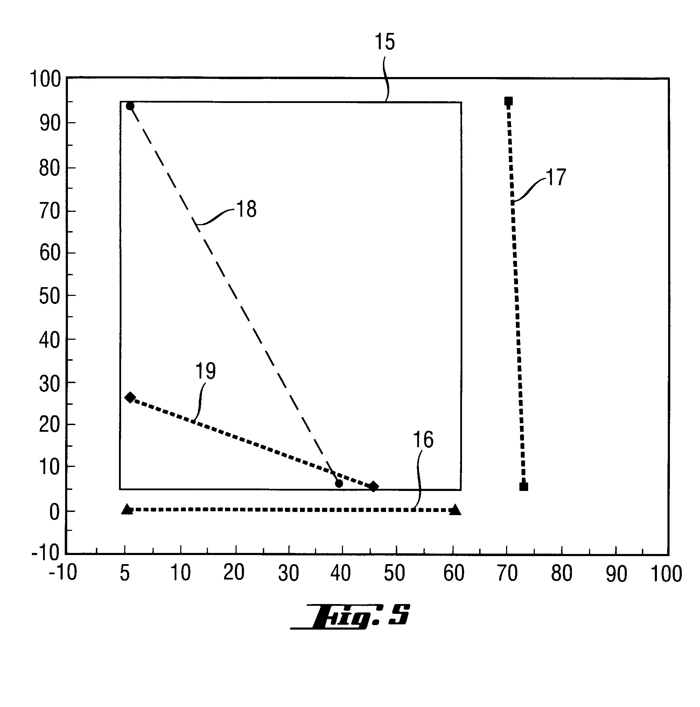

☐ **figure 4** : une représentation d'un élément selon l'invention utilisant trois substrats rigides,

☐ **figure 5 :** un graphe comparatif des valeurs de $T_L$ et du flou.

Les figures 1 à 4 sont extrêmement schématiques et ne respectent pas les proportions entre les différents éléments représentés, ceci afin d'en faciliter la lecture. Ne sont pas représentées notamment toutes les connexions électriques, qui sont connues en soi.

Les substrats rigides utilisés pour tous les exemples suivants sont des substrats en verre clair silico-sodo-calcique de 4 mm. (Ils pourraient également être teintés dans la masse et présenter des épaisseurs différentes, par exemple comprises entre 3 et 6 mm).

Dans tous les exemples suivants, l'élément selon l'invention associe un système électrochrome à un système à cristaux liquides. Le système à cristaux liquides utilisé est du type de ceux décrits dans les brevets WO-90/03593, US-5 206 747 et EP-0 409 442.

Il se compose d'un film de polymère transparent, dans lequel ont été préalablement dispersées des micro-gouttes d'un cristal liquide nématique, qui constitue l'émulsion de cristaux liquides d'une épaisseur totale de 25 μm, et qui est pris en sandwich entre deux feuilles de polyéthylène téréphtalate (PET) de 175 μm d'épaisseur revêtues chacune d'une couche conductrice transparente en ITO de résistivité 100 Ohms par carré. La structure du système à cristaux liquides est donc la suivante : PET/ITO/émulsion cristaux liquides/ITO/PET.

Les molécules de cristal liquide possèdent plusieurs indices de réfraction : deux indices « ordinaires » égaux $n_o$ dans les deux directions perpendiculaires à leur axe de symétrie et un indice « extraordinaire » ne dans l'axe de symétrie. Le polymère est choisi de façon à avoir un indice de réfraction très voisin de l'indice ordinaire $n_o$. En l'absence de tension, les axes des différentes gouttes ne sont pas corrélés entre eux. La lumière incidente subit donc, à chaque interface polymère-goutte, une forte réfraction due à la différence d'indice entre le polymère et la goutte dont l'orientation est aléatoire. La lumière est donc diffusée dans toutes les directions. Sous tension maximum (110 volts), les axes optiques des différentes gouttes s'alignent dans le sens du champ électrique, soit perpendiculairement au vitrage. La lumière incidente, essentiellement normale au vitrage, ne voit plus qu'un milieu d'indice continu $n_p$ égal à $n_o$ et n'est plus diffusée. Les états intermédiaires de flou sont accessibles avec des valeurs de tension comprises notamment entre 0 et 110 volts.

Le type de système électrochrome utilisé, quant à lui, diffère selon le type de configuration de l'élément, ce que l'on explicitera lors de la description de chacune des figures, mais il fonctionne ici dans tous les cas par insertion réversible de protons H+.

☐ Soit il s'agit d'un système électrochrome ci-après désigné sous le terme de système «A», qui est un système « tout solide », et dont l'empilement de couches fonctionnelles est le suivant :

- une couche électroconductrice en $SnO_2$:F de 300 nm,
- une couche de matériau électrochrome cathodique en oxyde de tungstène de 380 nm,
- un électrolyte bi-couche se décomposant en une couche d'oxyde de tantale hydraté $Ta_2O_5$. $nH_2O$ de 18 nm et une couche d'oxyde de tungstène hydraté $WO_3.nH_2O$ de 200 nm,
- une couche de matériau électrochrome anodique à base d'oxyde d'iridium hydraté $H_xIrO_y$ de 45 nm, (elle peut être remplacée par de l'oxyde de nickel hydraté),
- une couche électroconductrice en ITO de 200 nm.

On fait fonctionner le système en imposant un potentiel de -1,6 v pour imposer la coloration et de + 0,6 v pour provoquer la décoloration du système.

☐ Soit il s'agit d'un système électrochrome ci-après désigné sous le terme de système « B », qui utilise un électrolyte sous la forme d'un polymère, et dont l'empilement de couches fonctionnelles est le suivant : (empilement conforme à l'enseignement du brevet EP-0 628 849) :

- une première couche électroconductrice en $SnO_2$:F de 300 nm,
- une première couche de matériau électrochrome anodique en oxyde d'iridium hydraté de 55 nm, (elle pourrait être remplacée par une couche en oxyde de nickel hydraté),
- une couche en oxyde de tantale hydraté $Ta_2O_5$. $nH_2O$ de 70 nm à fonction de protection,
- une couche d'électrolyte en solution solide de polyoxyéthylène avec de l'acide phosphorique $POE-H_3PO_4$ de 100 micromètres,
- une seconde couche de matériau électrochrome cathodique à base d'oxyde de tungstène de 350 nm,
- une seconde couche de $SnO_2$:F de 300 nm.

Il fonctionne dans la même plage de potentiel. Chacun des systèmes « A » et « B » est connecté à un générateur de tension à l'aide d'amenées de courant sous forme de bandes placées aux extrémités opposées de deux couches électroconductrices.

Les deux systèmes électrochromes tels que décrits permettent de « balayer » une plage de valeurs de transmission lumineuse comprise approximativement entre 5 et 60%.

Dans le cas où l'on cherche à atteindre quand cela est nécessaire, un véritable effet d'occultation (ce qui est le cas des applications en tant qu'écran de rétroprojection fonctionnant en transmission, comme évoqué plus haut), on peut atteindre des valeurs de transmission bien plus basses, inférieures à 0,1%, par exemple de l'ordre de 0,01 à 0,05% en augmentant significativement l'épaisseur des couches d'insertion/désinsertion de l'empilement fonctionnel. On peut ainsi « épaissir » considérablement la couche de matériau électrochrome cathodique du type $WO_3$, jusqu'à des valeurs de plus de 500 nm et même de plus de 1000 nm, par exemple dans des épaisseurs comprises entre 500 et 1500 nm.

On peut également épaissir la couche de matériau électrochrome anodique, par exemple utiliser une couche d'oxyde d'iridium hydratée de plus de 100 nm et même de plus de 200 nm, notamment dans des épaisseurs de 100 à 300 nm.

Ainsi, si on utilise un système de type « B » avec une couche de $WO_3$ de 1000 nm et une couche d'$H_xIrO_y$ de 200 nm , on peut obtenir une $T_L$ d'environ 0,01% à l'état coloré. En contrepartie, à l'état décoloré, les transmissions lumineuses maximales que l'on peut obtenir sont alors peu élevées, notamment de l'ordre de 20 à 30%.

## EXEMPLE 1

Il correspond à la représentation de l'élément faite à la figure 1 : le substrat en verre 1 est muni, sur l'une de ses faces, du système à cristaux liquides 2 par l'intermédiaire d'un moyen adhésif 3, sous la forme d'une feuille d'adhésif double-face qui assure le collage par pression (notamment par une opération de type calandrage). Sur l'autre face du substrat, est disposé par une succession de dépôts par pulvérisation cathodique le système électrochrome 4 de type « A ».

## EXEMPLE 2

Il correspond à la représentation de la figure 2 : il n'y a toujours qu'un seul substrat en verre 1. Cette fois, on superpose au système 4 électrochrome « A », le système à cristaux liquide 2, toujours par l'intermédiaire d'un adhésif par pression 3.

## EXEMPLE 3

Il correspond à la représentation de la figure 3 : il y a deux substrats en verre 1, 10, entre lesquels est disposé le système à cristaux liquides 2 disposé entre deux feuilles 5, 6 de PVB, d'EVA ou de PU de 0,76 mm d'épaisseur. Le système électrochrome de type « A » est disposé soit entre l'une des feuilles 6 de PVB et le substrat de verre 10, soit sur la face extérieure du substrat 10. Pour plus de clarté, les deux configurations ont été représentées sous les références 4 et 4bis.

## EXEMPLE 4

Il correspond à la représentation de la figure 4 : cette fois, l'élément selon l'invention comprend 3 substrats en verre 1, 10, 11. Entre le substrat 1 et le substrat 10, est disposé le système à cristaux liquides 2 entre deux feuilles 5, 6 de PVB de 0,76 mm d'épaisseur. Entre le substrat 10 et le substrat 11, est disposé le système électrochrome 4 de type « B ». On peut noter que, notamment dans cette configuration, si l'on envisage d'utiliser l'élément en tant que vitrage tourné vers l'extérieur, le système électrochrome 4 est de préférence tourné vers l'intérieur : il se trouve alors protégé de certains rayonnements émis par le soleil qui peuvent affecter sa durabilité, notamment les rayonnements ultraviolets, grâce à l'interposition des feuilles de PVB 5, 6 auxquelles on incorpore avantageusement un filtre UV.

La figure 5 représente un graphe réalisé à l'aide des résultats obtenus à partir de l'exemple 4. Sur cette figure 5, on a en effet reporté en ordonnée les valeurs de flou (le flou, exprimé en pourcentage, est le rapport de la transmission diffuse sur la transmission lumineuse à 560 nm) en fonction des valeurs de transmission lumineuse en abcisse (exprimées en pourcentage selon l'illuminant $D_{65}$) accessibles avec le vitrage de l'exemple 4 et représentées par l'ensemble des points situés à l'intérieur du rectangle 15 (bords compris).

Le vitrage selon l'invention peut ainsi conjuguer des $T_L$ faibles associées à des flous élevés, ce qui correspond au quadrant supérieur gauche du cadre 15 délimitant la zone dans laquelle le vitrage peut, par exemple, remplir une fonction de volet.

Dans la zone délimitée par le quadrant supérieur droit, le vitrage présente une $T_L$ élevée et un flou élevé, et peut alors remplir également une fonction « anti-regard ».

Un flou faible conjugué à une $T_L$ faible permet d'avoir un vitrage permettant la vision tout en limitant l'échauffement d'une pièce ou d'un habitacle en cas d'un fort ensoleillement. Un flou élevé conjugué à une $T_L$ variable permet d'avoir un vitrage utilisable en tant qu'écran de rétroprojection diffusant adaptable en fonction de l'éclairement ambiant pour optimiser la qualité de l'image.

A titre de comparaison, on a reporté ces mêmes valeurs de flou en fonction de la $T_L$ pour d'autres types de vitrages « intelligents » :

- le segment de droite 16 est obtenu pour un vitrage électrochrome feuilleté du type :
    verre/système électrochrome « B »/verre/PVB/verre

Il ne « démarre » pas tout à fait à 0 % en $T_L$ en fait, mais à 5% à l'état le plus coloré, et balaye une gamme de $T_L$ allant jusqu'à 60% à l'état décoloré maximal. Par contre, le vitrage est non diffusant, quel que soit son état de coloration.

- le segment de droite 17 est obtenu pour un vitrage feuilleté dit à cristaux liquides tel que celui commercialisé sous le nom de « Priva-Lite » par la société SAINT-GOBAIN VITRAGE : le flou d'un tel vitrage peut varier entre environ 6% et des valeurs supérieures à 95%. Par contre, les variations de $T_L$ sont minimes, la $T_L$ restant à des valeurs proches de 70%, à 3 ou 4% près.

- le segment de droite 18 est utilisé pour un vitrage feuilleté à cristaux liquides de type « Priva-Lite » auquel on a incorporé 2% en concentration massique par rapport aux cristaux liquides d'un mélange de colorants dichroïques noirs. Il y a une interdépendance totale dans les variations de $T_L$ et de flou.

- le segment de droite 19 est obtenu pour un vitrage à système à valve optique à base de particules dichroïques, décrites dans le brevet WO-93/09460, plus particulièrement dans son exemple 1. Il y a là encore une interdépendance claire dans les variations de $T_L$ et de flou, cantonnées de plus dans des plages relativement étroites.

A noter par ailleurs que les axes du graphe comportent des valeurs négatives, ce qui n'a bien sûr aucune réalité physique, mais qui facilitent la lecture du graphe.

De la description de ces exemples, on peut tirer les conclusions suivantes :

- l'élément selon l'invention peut adopter des configurations très variées, selon, par exemple, que l'on privilégie la compacité (exemples 1 ou 2) ou la robustesse (exemple 4),

- quand on choisit un système à cristaux liquides enserré entre deux feuilles de PVB, elles-mêmes enserrées entre deux substrats de verre, on constitue un vitrage feuilleté (exemples 3 ou 4),

- de la comparaison faite à la figure 5, on peut vérifier que seul un élément selon l'invention permet d'obtenir les variations de flou et de $T_L$ de manière décorrélée, et notamment d'obtenir des « couples » de $T_L$/flou inaccessibles avec les vitrages « intelligents » actuellement disponibles.

**Revendications**

1. Elément à propriétés optiques variables, **caractérisé en ce qu'**il associe au moins un système à transmission/absorption lumineuse variable (4), notamment du type électrochrome ou viologène, à au moins un système à diffusion lumineuse variable (2), notamment du type valve optique ou à cristaux liquides, lesdits systèmes étant électrocommandés afin de moduler de manière décorrélée le niveau de transmission lumineuse et le niveau de diffusion lumineuse dudit élément.

2. Elément selon la revendication 1, **caractérisé en ce que** le système à transmission/absorption lumineuse variable (4) est un système électrochrome comportant un empilement de couches fonctionnelles comprenant une couche électroconductrice, une couche électrochrome dite cathodique susceptible d'insérer réversiblement des cations tels que $H^+$, $Li^+$, $Na^+$, $Ag^+$, une couche d'électrolyte, éventuellement une seconde couche électrochrome dite anodique susceptible d'insérer également réversiblement des cations et une seconde couche électroconductrice.

3. Elément selon la revendication 1 ou la revendication 2, **caractérisé en ce que** le système à transmission/absorption lumineuse variable (4) est un système électrochrome comprenant un empilement de couches fonctionnelles dont un matériau électrolyte sous la forme d'un liquide aqueux ou anhydre ou sous la forme de polymère(s) ou de gel(s).

4. Elément selon la revendication 1 ou la revendication 2, **caractérisé en ce que** le système à transmission/absorption lumineuse variable (4) est un système électrochrome comprenant un empilement de couches fonctionnelles dont une couche d'électrolyte sous la forme d'un matériau solide, notamment à base d'oxyde métallique, le système électrochrome ne contenant de préférence que des couches en matériau solide.

5. Elément selon l'une des revendications précédentes, **caractérisé en ce que** le système à transmission/absorption variable (4) est un système électrochrome comprenant un empilement de couches fonctionnelles que l'on dispose entre deux substrats rigides transparents (1, 10 - 10, 11), notamment en verre.

6. Elément selon l'une des revendications 1, 2 ou 4, **caractérisé en ce que** le système à transmission/absorption variable (4) est un système électrochrome comprenant un empilement de couches fonctionnelles que l'on dépose sur un seul substrat rigide transparent (1), notamment en verre.

7. Elément selon l'une des revendications précédentes, **caractérisé en ce que** le système à diffusion lumineuse variable (2) est un système à valve optique ou à cristaux liquides, notamment comprenant un film de polymère dans lequel sont noyées des billes de cristaux liquides, avec de préférence l'indice ordinaire des cristaux $n_o$ égal à l'indice du polymère $n_p$ et disposé entre deux couches électroconductrices.

8. Elément selon la revendication 7, **caractérisé en ce que** le film de polymère du type valve optique ou à cristaux liquides entre les deux couches électroconductrices est muni sur au moins une de ses faces, notamment sur chacune de ses faces, d'un substrat porteur rigide ou semi-rigide transparent, du type verre, polymère acrylique, certains polycarbonates PC, ou flexible du type polyéthylène téréphtalate PET ou autres polycarbonates.

9. Elément selon la revendication 8, **caractérisé en ce que** l'ensemble comportant le film de polymère du type valve optique ou à cristaux liquides, ses couches électroconductrices et son ou ses substrats-porteurs peut être feuilleté à au moins un substrat rigide transparent du type verre à l'aide d'au moins une couche de polymère organique d'assemblage du type polyvinylbutyral (PVB), éthylènevinylacétate EVA ou certains polyuréthanes (PU).

10. Elément selon l'une des revendications précédentes, **caractérisé en ce que** le système à transmission/absorption lumineuse variable (4) et le système à diffusion lumineuse variable (2) sont maintenus solidairement ensemble, mais espacés l'un de l'autre.

11. Elément selon l'une des revendications 1 à 9, **caractérisé en ce qu'**il comporte un substrat rigide (1), du type substrat en verre, muni sur l'une de ses faces d'un système électrochrome « tout solide » (4) comportant un empilement de couches fonctionnelles en matériau solide, et muni sur sa face opposée, ou superposé au système électrochrome, d'un système à cristaux liquides (2).

12. Elément selon l'une des revendications 1 à 10, **caractérisé en ce qu'**il comporte deux substrats rigides du type substrat en verre (1, 10), entre lesquels sont disposés un système électrochrome « tout solide » et un système à cristaux liquides.

13. Elément selon l'une des revendication 1 à 10, **caractérisé en ce qu'**il comporte deux substrats rigides du type substrat en verre (1, 10), avec un système électrochrome (4) disposé entre les deux substrats et un système à cristaux liquides (2) disposé sur la face extérieure de l'un des deux substrats, ou un système à cristaux liquides disposé entre les deux substrats et un système électrochrome « tout solide » disposé sur la face extérieure de l'un des deux substrats.

14. Elément selon l'une des revendications 1 à 10, **caractérisé en ce qu'**il comporte trois substrats rigides du type substrat en verre (1, 10, 11), avec un système électrochrome (4) disposé entre le premier et le second substrat (10, 11) et un système à cristaux liquides (2) disposé entre le second et le troisième substrat (1, 10).

15. Elément selon l'une des revendications précédentes, **caractérisé en ce que** le système à diffusion lumineuse variable (2) est un système à cristaux liquides que l'on fait adhérer à un substrat rigide du type verre (1, 10) ou au système à transmission/absorption lumineuse variable électrochrome (4) à l'aide d'un moyen adhésif, notamment d'une colle, d'un adhésif par pression ou d'une feuille d'un polymère organique (5, 6) d'assemblage PVB, PU, EVA.

16. Elément selon l'une des revendications précédentes, **caractérisé en ce qu'**il est monté en vitrage feuilleté et/ou en vitrage multiple à lame(s) de gaz intercalaire(s).

17. Utilisation de l'élément selon l'une des revendications précédentes en tant que vitrage pour le bâtiment, pour l'automobile, pour les véhicules industriels ou de transport collectif, en tant que vitrage ferroviaire ou vitrage avion.

18. Utilisation selon la revendication 17 en tant que vitrage extérieur ou en tant que vitrage de cloison intérieure, porte vitrée, notamment pour leur conférer une fonction de volet ou de moyen d'occultation.

19. Utilisation selon la revendication 17 en tant que vitrage « brise-soleil » pour bâtiment, notamment en tant que vitrage destiné à être inclinés par rapport à la verticale.

20. Utilisation de l'élément selon l'une des revendications 1 à 16, pour faire partie d'un écran pour rétroprojecteur, notamment pour un rétroprojecteur fonctionnant en transmission, en vue d'améliorer le contraste de l'écran ou pour un rétroprojecteur fonctionnant en réflexion en vue d'obscurcir l'écran.

21. Procédé de fonctionnement de l'élément selon l'une des revendications 1 à 16, **caractérisé en ce qu'**on pilote conjointement l'alimentation électrique du système à transmission/absorption lumineuse variable (4) et celle du système à diffusion lumineuse variable (2) pour obtenir les niveaux de transmission et de diffusion lumineuses voulus par commande manuelle, ou de manière automatisée.

22. Procédé selon la revendication 21, **caractérisé en ce que** l'alimentation électrique du système à transmission/absorption lumineuse variable (4) et/ou l'alimentation électrique du système à diffusion lumineuse variable (2) est (sont) effectuée(s) par régulation automatisée à l'aide de moyens électroniques et/ou informatiques selon une consigne préétablie ou asservie à la mesure d'un paramètre donné par des capteurs appropriés, notamment à la mesure de la température, de l'éclairement, de la transmission lumineuse, du flux solaire.

**Fig. 1**

**Fig. 2**

4 bis

10

4

6

2

5

1

**Fig. 3**

11

4

10

6

2

5

1

**Fig. 4**

Fig. 5

**Office européen des brevets**

# RAPPORT DE RECHERCHE EUROPEENNE

Numéro de la demande

EP 97 40 1568

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int.Cl.6) |
|---|---|---|---|
| X | FR 2 684 198 A (THOMSON CSF) 28 mai 1993 | 1-3,5,7, 8,14,18, 20,21 | G02F1/13 G02F1/1333 G02F1/15 |
| Y | * le document en entier * | 9,10, 15-17 | G02F1/153 E06B3/66 |
| A | | 20 | B60R1/08 G03B21/56 |
| X | EP 0 171 766 A (NIPPON DENSO CO) 19 février 1986<br>* page 3 - page 4 *<br>* page 11, ligne 26 - page 12; revendications 1,9; figure 8 * | 1.2,4.6, 8,13 | |
| X | PATENT ABSTRACTS OF JAPAN vol. 014, no. 343 (P-1082), 25 juillet 1990<br>& JP 02 120828 A (TOYODA GOSEI CO LTD), 8 mai 1990,<br>* abrégé * | 1,12 | |
| Y | US 4 848 875 A (BAUGHMAN RAY H ET AL) 18 juillet 1989 | 9,10, 15-17 | DOMAINES TECHNIQUES RECHERCHES (Int.Cl.6) |
| A | * colonne 3, ligne 58 - colonne 10, ligne 8; figures 4-6 * | 1,7,8, 12,13 | G02F E06B |
| A | EP 0 470 867 A (DONNELLY CORP) 12 février 1992 | 1-5,9, 14,15, 17,18, 21,22 | B60R G03B |
| | * page 4, ligne 1 - ligne 34; figures 1-3 * | | |

Le présent rapport a été établi pour toutes les revendications

| Lieu de la recherche | Date d'achèvement de la recherche | Examinateur |
|---|---|---|
| LA HAYE | 15 octobre 1997 | Stang, I |